# EUROPÄISCHE PATENTSCHRIFT

(11) **EP 2 670 785 B1**
(45) Veröffentlichungstag und Bekanntmachung des Hinweises auf die Patenterteilung: **14.03.2018**
(21) Anmeldenummer: 12700574.2
(22) Anmeldetag: 24.01.2012
(51) Int. Cl.: C08G 18/10, C08G 18/42, C08G 18/76, C08G 18/77, C08G 18/79, C08G 18/80, C09J 175/06, C03C 27/04, C09J 5/02, C09K 3/10, C08K 5/544

(54) **HAFTVERMITTLERZUSAMMENSETZUNG**
BONDING AGENT COMPOSITION
COMPOSITION D'UN AGENT ADHÉSIF

(30) Priorität: 03.02.2011 EP 11153249
(43) Veröffentlichungstag der Anmeldung: 11.12.2013
(73) Patentinhaber: Sika Technology AG, 6340 Baar (CH)
(72) Erfinder: GAILLARD, Géraldine, CH-8037 Zürich (CH)
(74) Vertreter: Sika Patent Attorneys
(86) Internationale Anmeldenummer: PCT/EP2012/051021
(87) Internationale Veröffentlichungsnummer: WO 2012/104170

(56) Entgegenhaltungen:
- EP-A1- 1 947 126
- EP-A2- 0 339 262
- DE-A1-102005 009 790
- US-A- 5 218 133

## Beschreibung

### Technisches Gebiet

Die Erfindung betrifft das Gebiet der Haftvermittlerzusammensetzungen und deren Verwendung als Voranstriche für Kleb- und Dichtstoffe.

### Stand der Technik

Haftvermittlerzusammensetzungen werden schon seit längerem eingesetzt, um die Haftung von Kleb- und Dichtstoffen auf unterschiedlichen Untergründen zu verbessern. Besonders hohe Anforderungen an die Haftung stellen sich dabei an Verklebungen in der Automobilindustrie, wodurch der Einsatz von Haftvermittlerzusammensetzungen in diesem Bereich weit verbreitet ist. Beispielsweise beschreibt US 2008/0268261 A1 eine Haftvermittlerzusammensetzung für Glassubstrate, welche insbesondere in der Scheibenverklebung beim Automobilbau verwendet wird. Derartige Zusammensetzungen bewirken gute Haftungseigenschaften ein- oder zweikomponentiger Polyurethankleb-oder Dichtstoffe auf Glassubstraten. Der Nachteil derartiger Zusammensetzungen besteht jedoch häufig darin, dass sie Schwächen in der Hitzestabilität und in der Stabilität des Haftverbunds im Tieftemperaturbereich aufweisen. Weiterhin beschreibt WO 2008/087175 A1 Haftvermittlerzusammensetzungen für polymere Substrate, welche neben ausgezeichneten Haftungseigenschaften auch eine gute Hitzestabilität und Stabilität des Haftverbunds im Tieftemperaturbereich aufweisen. Derartige Zusammensetzungen eignen sich jedoch nicht zur Verbesserung der Haftung auf Glas und Glaskeramik.

### Darstellung der Erfindung

Aufgabe der vorliegenden Erfindung ist es daher, eine Haftvermittlungszusammensetzung zur Verfügung zu stellen, welche zu einer Verbesserung der Haftung auf Glas und Glaskeramik führt und welche eine gute Hitzestabilität und Stabilität des Haftverbunds im Tieftemperaturbereich aufweist.

Überraschenderweise wurde gefunden, dass diese Aufgabe durch eine Haftvermittlerzusammensetzung nach Anspruch 1 gelöst wird.

Erfindungsgemässe Haftvermittlerzusammensetzungen zeichnen sich überraschenderweise durch eine ausgezeichnete Haftung auf Glas und Glaskeramik aus und weisen gleichzeitig eine sehr gute Stabilität des Haftverbunds bei erhöhten Temperaturen sowie im Tieftemperaturbereich auf.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Haftvermittlerzusammensetzung enthaltend
- mindestens ein filmbildendes Harz;
- mindestens ein aromatisches Polyisocyanat;
- mindestens ein Lösungsmittel; sowie
- mindestens ein Isocyanurat der Formel (I).

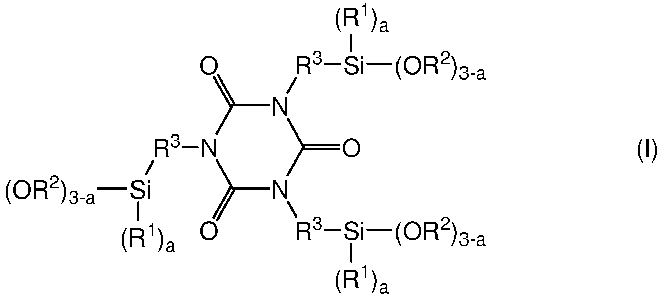

Die Reste R¹ stehen dabei jeweils unabhängig voneinander für einen linearen oder verzweigten, einwertigen Kohlenwasserstoffrest mit 1 bis 12 C-Atomen, welcher gegebenenfalls eine oder mehrere C-C-Mehrfachbindungen und/oder gegebenenfalls cycloaliphatische und/oder aromatische Anteile aufweist.
Die Reste R² stehen jeweils unabhängig voneinander für einen linearen oder verzweigten, einwertigen Kohlenwasserstoffrest mit 1 bis 12 C-Atomen, welcher gegebenenfalls ein oder mehrere Heteroatome und gegebenenfalls eine oder mehrere C-C-Mehrfachbindungen und/oder gegebenenfalls cycloaliphatische und/oder aromatische Anteile aufweist.
Der Index a steht unabhängig voneinander für einen Wert von 0, 1 oder 2. Die Reste R³ stehen jeweils unabhängig voneinander für einen linearen oder verzweigten, zweiwertigen Kohlenwasserstoffrest mit 1 bis 12 C-Atomen, welcher gegebenenfalls ein oder mehrere Heteroatome und gegebenenfalls eine oder mehrere C-C-Mehrfachbindungen und/oder gegebenenfalls cycloaliphatische und/oder aromatische Anteile aufweist.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Polyisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.
Als "Aminosilane", "Mercaptosilane" oder "Epoxysilane" werden Organosilane bezeichnet, deren organischer Rest eine Aminogruppe, eine Mercaptogruppe bzw. eine Epoxidgruppe aufweist.
Unter "Molekulargewicht" versteht man im vorliegenden Dokument stets das Molekulargewichtsmittel Mₙ (Zahlenmittel).

Die erfindungsgemässe Haftvermittlerzusammensetzung umfasst mindestens ein filmbildendes Harz. Geeignete Harze sind dabei beispielsweise Harze aus Poly(meth)acrylaten, Epoxiden, Polyestern, Polyetherpolyestern, Polyvinylchlorid, Chlorkautschuk, Ethylenvinylacetat und dergleichen sowie Kombinationen davon.

Insbesondere handelt es sich beim filmbildenden Harz um ein Polyesterharz. Vorzugsweise weist das Polyesterharz mindestens eine Hydroxylgruppe auf. Bevorzugt ist es amorph und bei Raumtemperatur fest. Der durch die Ring & Kugel- (Ring & Ball) Methode gemessene Schmelzpunkt (Melt Flow) des Polyesterharzes liegt typischerweise über 140°C, insbesondere im Bereich zwischen 150 und 160°C. Zusätzlich weist das Polyesterharz bei 25°C eine Shore-D Härte von vorzugsweise zwischen 70 und 85, insbesondere zwischen 75 und 85, bevorzugt zwischen 77 und 82, auf.
Als Polyesterharz geeignet sind insbesondere Polyesterharze, welche aus mindestens einer Dicarbonsäure und mindestens einem Glykol hergestellt werden. Bevorzugt weist das Polyesterharz ein Molekulargewicht von 3000 bis 100'000 g/mol, insbesondere von 15'000 und 40'000 g/mol, auf.
Weiterhin weist das Polyesterharz vorzugsweise eine mittlere OH-Zahl von 1 bis 10 mg KOH/g, insbesondere von 2 bis 9 mg KOH/g, bevorzugt von 3 bis 6 mg KOH/g, auf.

Besonders bevorzugt werden als Polyesterharze diejenigen, welche innerhalb der 2000-er Produktereihe Vitel® der Firma Bostik kommerziell erhältlich sind. Insbesondere sind dies Vitel® 2100, Vitel® 2180, Vitel® 2190, Vitel® 2000, Vitel® 2200, Vitel® 2300 und Vitel® 2700. Als besonderes bevorzugt gilt Vitel® 2200, beziehungsweise Vitel® 2200B.

Weiterhin enthält die Haftvermittlerzusammensetzung zusätzlich mindestens ein aromatisches Polyisocyanat. Insbesondere handelt es sich dabei um ein aromatisches Diisocyanat wie 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI) oder 3,3'-Dimethyl-4,4'-diisocyanatodiphenyl (TODI).
Weiterhin kann es sich beim aromatischen Polyisocyanat um ein aromatisches Polyisocyanat handeln, welches mindestens eine Phosphat-, Thiophosphat-oder Thiophosphangruppe aufweist. Beim aromatischen Polyisocyanat, welches mindestens eine Phosphat-, Thiophosphat- oder Thiophosphangruppe aufweist, handelt es sich insbesondere um Tris(p-isocyanatophenyl)-thiophosphat, wie es beispielsweise unter dem Handelsnamen Desmodur® RFE von der Firma Bayer MaterialScience erhältlich ist.

Als aromatische Polyisocyanate eignen sich beispielsweise auch Oligomere und Polymere der vorgenannten aromatischen Polyisocyanate, deren Biurete, Isocyanurate und/oder deren Addukte mit niedrigmolekularen zwei- oder mehrwertigen Alkoholen sowie beliebige Mischungen der vorgenannten Polyisocyanate.
Als niedrigmolekulare zwei- oder mehrwertige Alkohole eignen sich beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole. Weitere geeignete niedrigmolekulare zwei- oder mehrwertige Alkohole sind Polyole wie Polyether, Polyester, Polycarbonate, Polyolefinpolyole mit einer Funktionalität von 2 bis 10, insbesondere 2 bis 4, und einem Molekulargewicht von insbesondere 50 bis 2500 g/mol. Bevorzugte Addukte von aromatischen Polyisocyanaten mit niedrigmolekularen zwei- oder mehrwertigen Alkoholen weisen insbesondere ein Molekulargewicht im Bereich von 300 bis 30'000 g/mol, bevorzugt 500 bis 5000 g/mol, meist bevorzugt 500 bis 3000 g/mol, auf.
Beispielsweise sind derartige aromatische Polyisocyanate kommerziell erhältlich unter den Handelsbezeichnungen Echelon™ MP100- und MP400-Typen von Dow Chemical Company, Desmodur® E14, E15, E21, E22, E23 sowie L-Typen von Bayer MaterialScience und Adiprene® LF-, LFM- und LFP-Typen von Chemtura Corporation.

Der Anteil des aromatischen Polyisocyanats, wie es in der erfindungsgemässen Haftvermittlerzusammensetzung bei deren Herstellung eingesetzt wird, beträgt vorzugsweise 0.01 bis 40 Gew.-%, insbesondere 0.1 bis 30 Gew.-%, bevorzugt 1 bis 20 Gew.-%, bezogen auf die gesamte Haftvermittlerzusammensetzung.

In einer bevorzugten Ausführungsform umfasst die Haftvermittlerzusammensetzung mindestens zwei aromatische Polyisocyanate, wovon mindestens eines ein aromatisches Polyisocyanat ist, welches mindestens eine Phosphat-, Thiophosphat- oder Thiophosphangruppe aufweist.

Umfasst die Haftvermittlerzusammensetzung mindestens zwei aromatische Polyisocyanate, wovon mindestens eines ein aromatisches Polyisocyanat ist, welches mindestens eine Phosphat-, Thiophosphat- oder Thiophosphangruppe aufweist, beträgt der Anteil des aromatischen Polyisocyanats, welches mindestens eine Phosphat-, Thiophosphat- oder Thiophosphangruppe aufweist, wie es in der erfindungsgemässen Haftvermittlerzusammensetzung bei deren Herstellung eingesetzt wird, vorzugsweise 0.01 bis 20 Gew.-%, insbesondere 0.1 bis 12 Gew.-%, bevorzugt 1 bis 8 Gew.-%, bezogen auf die gesamte Haftvermittlerzusammensetzung.

Weiterhin kann die Haftvermittlerzusammensetzung zusätzlich mindestens ein aliphatisches Polyisocyanat enthalten. Insbesondere handelt es sich dabei um ein aliphatisches Diisocyanat wie 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, Oligomere und Polymere der vorgenannten Polyisocyanate, deren Biurete oder Isocyanurate sowie beliebige Mischungen der vorgenannten Polyisocyanate.
Als aliphatische Polyisocyanate eignen sich beispielsweise auch Addukte der vorgenannten aliphatischen Polyisocyanate mit niedrigmolekularen zwei- oder mehrwertigen Alkoholen, wie sie vorhergehend beschrieben worden sind, sowie beliebige Mischungen der vorgenannten Polyisocyanate.
Bevorzugte Addukte von aliphatischen Polyisocyanaten mit niedrigmolekularen zwei- oder mehrwertigen Alkoholen weisen insbesondere ein Molekulargewicht im Bereich von 300 bis 30'000 g/mol, bevorzugt 500 bis 5000 g/mol, meist bevorzugt 500 bis 3000 g/mol, auf.
Beispielsweise sind derartige aliphatische Polyisocyanate kommerziell erhältlich unter den Handelsbezeichnungen Desmodur® XP2617, XP2599 und E305 von Bayer MaterialScience, Adiprene® LFH-Typen von Chemtura Corporation und Incorez 700-Typen von Incorez.

Der Anteil des aliphatischen Polyisocyanats, wie es in der erfindungsgemässen Haftvermittlerzusammensetzung bei deren Herstellung eingesetzt wird, beträgt vorzugsweise 0 bis 20 Gew.-%, insbesondere 0.1 bis 20 Gew.-%, bevorzugt 1 bis 10 Gew.-%, bezogen auf die gesamte Haftvermittlerzusammensetzung.

Vorzugsweise umfasst die Haftvermittlerzusammensetzung als filmbildendes Harz ein Polyesterharz, welches mindestens eine Hydroxylgruppe aufweist, wobei dieses in der Haftvermittlerzusammensetzung insbesondere so vorliegt, dass die mindestens eine Hydroxylgruppe mit einer Isocyanatgruppe eines Isocyanatgruppen aufweisenden Bestandteils der Haftvermittlerzusammensetzung umgesetzt worden ist. Insbesondere ist die mindestens eine Hydroxylgruppe des bevorzugten Polyesterharzes in der Haftvermittlerzusammensetzung mit einer Isocyanatgruppe eines aromatischen Polyisocyanats, bevorzugt eines aromatischen Polyisocyanats, welches mindestens eine Phosphat-, Thiophosphat- oder Thiophosphangruppe aufweist, umgesetzt.

Der Anteil des Polyesterharzes, wie es in der erfindungsgemässen Haftvermittlerzusammensetzung bei deren Herstellung eingesetzt wird, beträgt vorzugsweise 1 bis 30 Gew.-%, insbesondere 2 bis 20 Gew.-%, bevorzugt 7 bis 10 Gew.-%, bezogen auf die gesamte Haftvermittlerzusammensetzung.

Weiterhin umfasst die vorliegende Erfindung mindestens ein Isocyanurat der Formel (I), wie es vorhergehend beschrieben worden ist.
Insbesondere handelt es sich beim Isocyanurat der Formel (I) um ein solches, bei welchem der Index a für einen Wert von 0 steht und/oder bei welchem die Reste R² jeweils unabhängig voneinander für eine Methyl-, Ethyl- oder Isopropylgruppe steht. Weiterhin kann R² für eine Acylgruppe stehen. Insbesondere steht a für 0 und R² für eine Methylgruppe.

Geeignete Isocyanurate lassen sich beispielsweise herstellen aus der Umsetzung eines Isocyanurats eines Polyisocyanats, insbesondere eines Diisocyanats, mit einem Silan, welches mindestens eine gegenüber Isocyanatgruppen reaktive funktionelle Gruppe aufweist. Insbesondere handelt es sich dabei um ein Amino- oder ein Mercaptosilan.

Bevorzugte Isocyanurate sind Isocyanurate von Isocyanatosilanen. Vorzugsweise handelt es sich dabei um lineare, aliphatische Isocyanatosilane, sodass Isocyanurate der Formel (I) erhalten werden, bei welchen der Rest R³ für einen linearen Alkylenrest mit 1 bis 6 C-Atomen steht.
Bevorzugt steht der Rest R³ für einen linearen Alkylenrest mit 3 C-Atomen. Meist bevorzugt sind Isocyanurate von 3-Isocyanatopropyltrialkoxysilanen, wie 3-Isocyanatopropyltrimethoxysilan.
3-Isocyanatopropyltrialkoxysilane sind als Ausgangsstoff zur Herstellung der Isocyanurate der Formel (I) bevorzugt, da sie im Vergleich zu Isocyanatosilanen mit einem kürzeren Alkylenrest, also beispielsweise zu α-Isocyanatosilanen, weniger reaktiv und somit einfacher in der Handhabung sind. Der Vorteil gegenüber Isocyanatosilanen mit einem Alkylenrest von mehr als 3 C-Atomen besteht in der kommerziellen Verfügbarkeit von 3-Isocyanatopropyltrialkoxysilanen.
Der Vorteil der Isocyanurate, welche aus Isocyanatosilanen erhalten werden, gegenüber jenen aus Diisocyanaten und beispielsweise einem Aminosilan besteht unter anderem darin, dass erstere einfacher herzustellen sind.
Die Herstellung eines Isocyanurats ausgehend von Isocyanatosilanen erfolgt typischerweise bei erhöhten Temperaturen und der Anwesenheit spezifischer Katalysatoren. Derartige Herstellungsverfahren sind dem Fachmann bekannt.

Beispielsweise ist ein besonders bevorzugtes Isocyanurat der Formel (I) unter dem Handelsnamen Silquest® A-Link 597 kommerziell erhältlich von Momentive Performance Materials.

Der Anteil des Isocyanurats der Formel (I) beträgt vorzugsweise 0.1 bis 10 Gew.-%, insbesondere 1 bis 10 Gew.-%, bevorzugt 3 bis 6 Gew.-%, der gesamten Haftvermittlerzusammensetzung.

Die Haftvermittlerzusammensetzung weist zusätzlich mindestens ein Lösungsmittel auf. Als Lösungsmittel werden insbesondere Ether, Ketone, Ester oder Kohlenwasserstoffe, bevorzugt Diethylether, Tetrahydrofuran, Methylethylketon, Aceton, Xylol, Toluol oder Acetate, insbesondere Methylacetat, Ethylacetat, Butylacetat, Methoxybutylacetat oder Methoxypropylacetat, verwendet.
Es ist durchaus möglich und kann sogar von Vorteil sein, eine Mischung verschiedener Lösungsmittel einzusetzen.

Der Anteil des Lösungsmittels beträgt insbesondere 10 bis 90 Gew.-%, bevorzugt 40 bis 80 Gew.-%, der gesamten Haftvermittlerzusammensetzung.

Vorzugsweise enthält die Haftvermittlerzusammensetzung zusätzlich mindestens ein Silan der Formel R⁴-Si(R¹)ₐ(OR²)₃₋ₐ.
Die Reste R¹ und R² sowie der Index a stehen dabei unabhängig voneinander für Reste bzw. für einen Wert, welche vorhergehend bereits beschrieben worden sind.
Der Rest R⁴ steht für einen Alkylrest mit mindestens einer funktionellen Gruppe, welche gegebenenfalls eine gegenüber Isocyanatgruppen reaktive funktionelle Gruppe ist. Die funktionelle Gruppe ist insbesondere eine Epoxid-, (Meth)acrylatester-, Amin-, Mercapto- oder Vinylgruppe.

Der Anteil des Silan der Formel R⁴-Si(R¹)ₐ(OR²)₃₋ₐ, wie es in der erfindungsgemässen Haftvermittlerzusammensetzung bei deren Herstellung eingesetzt wird, beträgt vorzugsweise 0 bis 5 Gew.-%, insbesondere 0.1 bis 3 Gew.-%, bevorzugt 0.5 bis 1.5 Gew.-%, bezogen auf die gesamte Haftvermittlerzusammensetzung.

Handelt es sich bei der funktionellen Gruppe um eine solche, welche gegenüber Isocyanatgruppen reaktiv ist, so ist diese gegebenenfalls mit einer Isocyanatgruppe eines in der Haftvermittlerzusammensetzung vorhandenen aromatischen oder aliphatischen Polyisocyanats zu einem Addukt umgesetzt. Insbesondere liegt ein Addukt in der Haftvermittlerzusammensetzung vor, welches das Reaktionsprodukt ist aus einem Silan, welches eine gegenüber Isocyanatgruppen reaktive funktionelle Gruppe aufweist, und einem aliphatischen Polyisocyanat, wie es vorhergehend beschrieben worden ist.

Vorzugsweise enthält die Haftvermittlerzusammensetzung weiterhin mindestens einen Füllstoff. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ, PVC-Pulver oder Hohlkugeln. Es ist durchaus möglich und kann sogar von Vorteil sein, eine Mischung verschiedener Füllstoffe einzusetzen.
Meist bevorzugt enthält die Haftvermittlerzusammensetzung Russ als Füllstoff.

Der Anteil des Füllstoffs beträgt insbesondere 0 bis 20 Gew.-%, bevorzugt 1 bis 15 Gew.-%, der gesamten Haftvermittlerzusammensetzung.

Weiterhin enthält die erfindungsgemässe Haftvermittlerzusammensetzung vorzugsweise zusätzlich mindestens einen Katalysator, welcher die Reaktion der Isocyanatgruppen beschleunigt. Geeignete Katalysatoren sind beispielsweise Organozinnverbindungen wie Dibutylzinndilaurat, Dibutylzinndichlorid, Dibutylzinndiacetylacetonat, Bismut-organische Verbindungen oder Bismut-Komplexe, oder amingruppenhaltige Verbindungen wie beispielsweise 2,2'-Dimorpholinodiethylether oder 1,4-Diazabicyclo[2.2.2]octan, oder andere, in der Polyurethanchemie übliche Katalysatoren.

Der Anteil an Katalysator beträgt insbesondere 0.01 bis 1 Gew.-% der gesamten Haftvermittlerzusammensetzung.

Weiterhin kann die erfindungsgemässe Haftvermittlerzusammensetzung zusätzlich mindestens einen latenten Härter für die Vernetzung der

Isocyanatgruppen aufweisenden Bestandteile in der Haftvermittlerzusammensetzung enthalten. Insbesondere handelt es sich dabei um einen latenten Härter auf Basis von Polyaldimin oder auf Basis von Oxazolidinen, bevorzugt um ein Polyaldimin, wie es beispielsweise als Polyaldimin ALD beschrieben ist in WO 2009/080731 A1.

Der Vorteil des Einsatzes von latenten Härtern in der Haftvermittlerzusammensetzung besteht darin, dass der Aufbau der Haftung der Haftvermittlerzusammensetzung gegenüber jenen ohne latente Härter beschleunigt werden kann. Dies hat einerseits den Vorteil, dass die Ablüftzeit der Haftvermittlerzusammensetzung bis zur Applikation des Kleb- oder Dichtstoffs reduziert werden kann, andererseits erlaubt es die Anwendung der Haftvermittlerzusammensetzung auch bei tieferen Temperaturen im Bereich von etwa 0 bis 20°C und/oder bei niedriger relativer Luftfeuchtigkeit von 20 bis 50%.
Diese Eigenschaft ist besonders im Zusammenhang mit der Stabilität des Haftverbunds im Tieftemperaturbereich, wie vorhergehend beschreiben, sehr vorteilhaft.

Die Haftvermittlerzusammensetzung kann weitere Bestandteile, wie beispielsweise Trocknungsmittel, Thixotropiermittel, Dispergiermittel, Netzmittel, Korrosionsinhibitoren, weitere Haftvermittler, UV- und Hitzestabilisatoren, Pigmente, Farbstoffe und UV-Indikatoren umfassen.

Die Herstellung der Haftvermittlerzusammensetzung erfolgt bevorzugt durch Vorlegen des, typischerweise in einem Lösungsmittel gelösten, filmbildenden Harzes und anschliessender Zugabe der Isocyanatgruppen enthaltenden Verbindungen. Werden mehrere Isocyanatgruppen enthaltende Verbindungen verwendet, also beispielsweise ein aromatisches Polyisocyanat, welches eine Thiophosphatgruppe aufweist, und ein aliphatisches Polyisocyanat, so können sie dem gelösten Harz bereits als Mischung oder einzeln nacheinander zugegeben werden.

Ein alternatives Herstellungsverfahren ist die Vorlage des oder der Isocyanatgruppen enthaltenden Verbindungen, und anschliessender Zugabe des filmbildenden Harzes.

Die Herstellung der erfindungsgemässen Haftvermittlerzusammensetzung ist, insbesondere was die Reihenfolge der Zusammenführung der einzelnen Bestandteile betrifft, davon abhängig, welche Addukte aus den Bestandteilen gewünscht werden.
Ist beispielsweise ein Addukt des Polyesterharzes, welches eine Hydroxylgruppe aufweist mit dem aromatischen Polyisocyanat, welches mindestens eine Phosphat-, Thiophosphat- oder Thiophosphangruppe aufweist, erwünscht, so werden diese beiden Bestandteile in einem ersten Schritt zusammengeführt, bevor andere Isocyanatgruppen aufweisende Bestandteile zugemischt werden.
Das gleiche gilt, falls Addukte von aliphatischen Polyisocyanaten beispielsweise mit einem Silan, welches eine gegenüber Isocyanatgruppen reaktive funktionelle Gruppe aufweist, gewünscht werden.
Die Herstellung derartiger Addukte kann bei erhöhter Temperatur und unter Verwendung vorhergehend beschriebener Katalysatoren erfolgen.

Weiterhin betrifft die vorliegende Erfindung die Verwendung einer Haftvermittlerzusammensetzung, wie sie vorhergehend beschrieben worden ist, zur Verbesserung der Haftung von Kleb- und Dichtstoffen, insbesondere von Polyurethankleb- und Dichtstoffen, auf Glas und Glaskeramik. Insbesondere eignet sich die erfindungsgemässe Haftvermittlerzusammensetzung für die Verwendung mit einer geringen Ablüftzeit, d.h. von weniger als 15 Minuten.

Der Vorteil der erfindungsgemässen Haftvermittlerzusammensetzung besteht darin, dass sie bei gegenüber dem Stand der Technik gleichbleibender oder verbesserter Haftung auf Glas und Glaskeramik gleichzeitig über eine gute Hitzestabilität und in der Stabilität des Haftverbunds im Tieftemperaturbereich verfügt.

Die Applikation der Haftvermittlerzusammensetzung kann mittels Tuch, Filz, Rolle, Sprühen, Schwamm, Pinsel, Tauchbeschichten oder dergleichen erfolgen und kann sowohl manuell als auch automatisiert erfolgen.

Weiterhin betrifft die vorliegende Erfindung ein mit einer Haftvermittlerzusammensetzung, wie sie vorhergehend beschrieben worden ist, beschichtetes Substrat. Beim Substrat handelt es sich insbesondere um Glas oder um Glaskeramik. Insbesondere handelt es sich dabei um Glas oder Glaskeramik, wie sie typischerweise in Fahrzeugscheiben vorkommen, bzw. im Randbereich von Fahrzeugscheiben aufgebracht sind. Der Aufbau und die Herstellung solcher Substrate sind dem Fachmann bekannt.

Als Kleb- oder Dichtstoff kann grundsätzlich jeder ein- oder mehrkomponentige Klebstoff verwendet werden. Vorzugsweise wird ein feuchtigkeitshärtender Kleb- oder Dichtstoff verwendet, insbesondere einer, dessen Aushärtung mittels Luftfeuchtigkeit erfolgt. Typischerweise handelt es sich dabei um Kleb-oder Dichtstoffe auf Basis von Silan oder Isocyanatgruppen terminerter Polymere.
Die vorteilhaften Haftverbesserungen haben sich insbesondere bei Polyurethanklebstoffen oder -dichtstoffen gezeigt, insbesondere bei Polyurethanklebstoffen, welche Isocyanatgruppen aufweisende Polyurethanpolymere enthalten. Derartige Polyurethanklebstoffe sind kommerziell breit erhältlich, beispielsweise unter dem Namen Sikaflex® oder SikaTack® von Sika Schweiz AG.
Als geeignete Klebstoffe auf Basis von Isocyanatgruppen terminierten Polyurethanpolymeren werden ebenfalls zweikomponentige Polyurethanklebstoffe verstanden, deren erste Komponente ein Amin- oder ein Polyol und deren zweite Komponente ein Isocyanatgruppen aufweisendes Polyurethanpolymer oder ein Polyisocyanat umfasst. Beispiele für solche zweikomponentige, bei Raumtemperatur härtende Polyurethanklebstoffe sind solche aus der SikaForce®-Produktlinie, wie sie kommerziell erhältlich sind von Sika Schweiz AG.

Als geeignete Klebstoffe auf Basis von Isocyanatgruppen terminierten Polymeren sind weiterhin reaktive Polyurethan-Heissschmelzklebstoffe zu verstehen, die ein thermoplastisches Polymer sowie ein Isocyanatgruppen terminiertes Polymer oder ein thermoplastisches Isocyanatgruppen terminiertes Polymer enthalten. Solche reaktiven Polyurethan-Heissschmelzklebstoffe werden aufgeschmolzen und verfestigen sich einerseits beim Abkühlen und vernetzen andererseits über eine Reaktion mit Luftfeuchtigkeit. Beispielsweise sind solche reaktiven Polyurethan-Heissschmelzklebstoffe unter dem Namen SikaMelt® kommerziell erhältlich bei Sika Schweiz AG.

Weiterhin umfasst die vorliegende Erfindung ebenfalls verklebte oder abgedichtete Artikel, welche dadurch erhalten werden, dass eine Haftvermittlerzusammensetzung, wie sie vorhergehend beschrieben worden ist, auf einem Substrat appliziert wird, darauf nach dem Ablüften ein Kleb- oder Dichtstoff appliziert wird und dieser mit einem zweiten Substrat, welches gegebenenfalls auch mit einer Haftvermittlerzusammensetzung und/oder mit Kleb- oder Dichtstoff versehen ist, kontaktiert wird.
Bei diesen Artikeln handelt es sich vorzugsweise um Fensterscheiben von Transportmitteln, insbesondere um Fensterscheiben von Automobilen und Lastkraftwagen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung der Haftvermittlerzusammensetzungen

Gemäss den Mengen in Tabelle 1 wurde Vitel® 2200 B in Methylethylketon vorgelegt. Dann wurden Desmodur® RFE, Voranate® M580, Desmodur® N 3300 bzw. Silquest® A-Link 597 nacheinander unter Stickstoffatmosphäre und ständigem Rühren zugegeben und während 1 Stunde bei 30°C gerührt. Anschliessend wurde auf 40°C aufgeheizt und gerührt bis der NCO-Gehalt konstant war. Anschliessend wurde Russ zugegeben. Die Zusammensetzung wurde in einer dicht verschliessbaren Blechdose mit Glaskugeln versetzt, verschlossen und während 1 Stunde mit Hilfe einer Red Devil-Schüttelapparatur vermischt.

**Tabelle 1: Haftvermittlerzusammensetzungen in Gew.-%**

| | ***Ref.1*** | ***Ref.2*** | ***1*** |
|---|---|---|---|
| Vitel® 2200 B | 9.24 | 8.8 | 8.8 |
| Desmodur® RFE | 16.7 | 13.59 | 13.59 |
| Voranate® M580 | 3.38 | 2.93 | 2.93 |
| Desmodur® N 3300 | | 4 | |
| Silquest® A-Link 597 ^{a)} | | | 4 |
| Methylethylketon | 61.68 | 61.68 | 61.68 |
| Russ | 9.0 | 9.0 | 9.0 |

| | | | |
|---|---|---|---|
| ^{a)} Tris(3-(trimethoxysilyl)propyl)isocyanurat | | | |

### Applikation und Aushärtung

Die Haftvermittlerzusammensetzungen wurden jeweils mit einem Pinsel auf verschiedene Substrate appliziert. Nach 10 Minuten Ablüftzeit wurden die Klebstoffe als Rundraupe mit einer Kartuschenpresse und einer Düse auf die mit Haftvermittlerzusammensetzung beschichteten Substrate aufgetragen. Die Klebstoffe wurden bei Raumtemperatur (23°C) aufgetragen.

Anschliessend wurde der Klebstoff während 7 Tagen bei 23°C und 50% relativer Luftfeuchtigkeit ("7d RT") ausgehärtet und ein Drittel der Raupe mittels unten beschriebenen Raupentest getestet. Danach wurde die Probe während weiteren 7 Tagen ins Wasser bei 23°C gelegt ("7d WL"). Anschliessend wurde die Haftung durch den Raupentest für ein weiteres Drittel der Raupe getestet. Daraufhin wurden die Substrate während weiteren 7 Tagen einem Cataplasmaklima von 100% relativer Luftfeuchtigkeit und 70°C ("7d CL"), ausgesetzt und danach die Haftung des letzten Drittels der Raupe ermittelt. Parallel dazu wurde, ausgehend von der Lagerung ("7d RT") und eines Haftungstests am ersten Drittel einer Raupe, eine Probe für einen Tag bei 120°C gelagert ("1d 120°C"), wonach die Haftung an einem weiteren Drittel der Raupe getestet wurde. Nach erneuter Lagerung der gleichen Probe bei gleichen Bedingungen wurde die Haftung am letzten Drittel der Raupe getestet.

Als Substrate wurden Float Glass (Luftseite) und Keramik ESG Ferro 14 251, jeweils kommerziell erhältlich von Rocholl, verwendet.

Als Klebstoffe wurden Sikaflex® 250 HMA-3 und Sikaflex® 250 DP-2 von Sika Schweiz AG verwendet.

### Testmethoden

Die **Haftung** des Klebstoffes wurde bei Raumtemperatur und 50% realtiver Luftfeuchtigkeit mittels 'Raupentest' getestet. Hierbei wird am Ende der Raupe knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie durch Plazieren eines Schnittes bis auf den blanken Untergrund senkrecht zur Raupenziehrichtung. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen des kohäsiven Anteils der Haftfläche:
1 = > 95% Kohäsionsbruch
2 = 75 - 95% Kohäsionsbruch
3 = 25 - 75% Kohäsionsbruch
4 = < 25% Kohäsionsbruch
5 = 0% Kohäsionsbruch (rein adhäsiver Bruch)

"P" bezeichnet in der Wertung eine Ablösung des Primers vom Untergrund. Testresultate mit Kohäsionsbruchwerten von weniger als 75% gelten als ungenügend.

Die **Zugscherfestigkeit** wurde in Anlehnung an ISO 4587/DIN EN 1465 auf einer Zugmaschine Zwick/Roell Z005 bestimmt, wobei jeweils ein Substrat (Float Glass (Luftseite) 100x40x6 mm) mit einem Substrat (Float Glass (Luftseite) 75x25x6 mm) verklebt wurde (Klebefläche: 12x25 mm; Klebstoffschichtdicke: 4 bis 5 mm; Messgeschwindigkeit: 20 mm/min; Temperatur: -40°C). Die Haftvermittlerzusammensetzung wurde auf Klebefläche beider Substrate mittels Pinsel appliziert. Die verklebten Substrate wurden vor der Messung während etwa 20 Minuten bei -40°C konditioniert.

**Tabelle 2: Resultate der Haftung nach unterschiedlichen Lagerungen**

| | **Klebstoff** | **7d RT** | **7d WL** | **7d CL** |
|---|---|---|---|---|
| Float Glass (Luftseite) | | | | |
| ***Ref.1*** | Sikaflex® 250 HMA-3 | 1 | 5P | 5P |
| | Sikaflex® 250 DP-2 | 1 | 5P | 5P |
| ***Ref.2*** | Sikaflex® 250 HMA-3 | 1 | 5P | 5P |
| | Sikaflex® 250 DP-2 | 1 | 5P | 5P |
| ***1*** | Sikaflex® 250 HMA-3 | 1 | 1 | 1 |
| | Sikaflex® 250 DP-2 | 1 | 1 | 2P |

| Keramik ESG Ferro 14 251 | | | | |
|---|---|---|---|---|
| ***Ref.1*** | Sikaflex® 250 HMA-3 | 1 | 5P | 5P |
| | Sikaflex® 250 DP-2 | 1 | 5P | 5P |
| ***Ref.2*** | Sikaflex® 250 HMA-3 | 1 | 3P | 5P |
| | Sikaflex® 250 DP-2 | 1 | 3P | 4P |
| ***1*** | Sikaflex® 250 HMA-3 | 1 | 1 | 1 |
| | Sikaflex® 250 DP-2 | 1 | 1 | 1 |

**Tabelle 3: Resultate der Haftung nach unterschiedlichen Lagerungen**

| | **Klebstoff** | **7d RT** | **1d 120°C** | **1d 120°C** |
|---|---|---|---|---|
| Float Glass (Luftseite) | | | | |
| ***Ref.1*** | Sikaflex® 250 HMA-3 | 1 | 1 | 1 |
| | Sikaflex® 250 DP-2 | 1 | 1 | 1 |
| ***Ref.2*** | Sikaflex® 250 HMA-3 | 1 | 1 | 1P |
| | Sikaflex® 250 DP-2 | 1 | 1 | 1 |
| ***1*** | Sikaflex® 250 HMA-3 | 1 | 1 | 1 |
| | Sikaflex® 250 DP-2 | 1 | 1 | 1 |

**Tabelle 4: Resultate der Messung der Zugscherfestigkeit "ZSF" bei -40°C (Durchschnitt aus sechs Messungen) und von Auge bestimmtes Bruchbild**

| | **Klebstoff** | **ZSF [MPa]** | **Bruchbild** |
|---|---|---|---|
| Verklebung Float Glass (Luftseite) auf Float Glass (Luftseite) | | | |
| ***Ref.1*** | Sikaflex® 250 HMA-3 | 10.6 | 100% Kohäsions- oder Glasbruch |
| ***Ref.2*** | Sikaflex® 250 HMA-3 | 9.4 | 100% Kohäsions- oder Glasbruch |
| ***1*** | Sikaflex® 250 HMA-3 | 11.8 | 100% Kohäsions- oder Glasbruch |

## Patentansprüche

1. Haftvermittlerzusammensetzung enthaltend
- mindestens ein filmbildendes Harz;
- mindestens ein aromatisches Polyisocyanat;
- mindestens ein Lösungsmittel; sowie
- mindestens ein Isocyanurat der Formel (I) 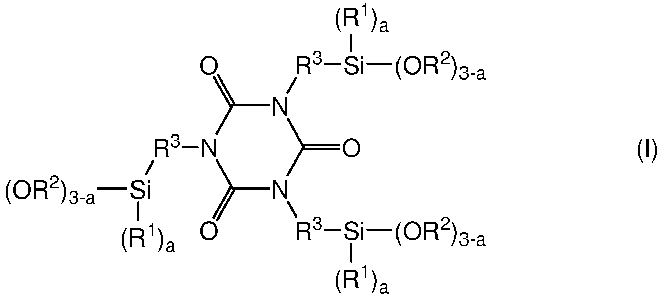 wobei
R¹ unabhängig voneinander für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist;
R² unabhängig voneinander für einen linearen oder verzweigten, einwertigen Kohlenwasserstoffrest mit 1 bis 12 C-Atomen steht, welcher gegebenenfalls ein oder mehrere Heteroatome und gegebenenfalls eine oder mehrere C-C-Mehrfachbindungen und/oder gegebenenfalls cycloaliphatische und/oder aromatische Anteile aufweist;
a für einen Wert von 0, 1 oder 2 steht;
R³ unabhängig voneinander für einen linearen oder verzweigten, zweiwertigen Kohlenwasserstoffrest mit 1 bis 12 C-Atomen steht, welcher gegebenenfalls ein oder mehrere Heteroatome und gegebenenfalls eine oder mehrere C-C-Mehrfachbindungen und/oder gegebenenfalls cycloaliphatische und/oder aromatische Anteile aufweist.

2. Haftvermittlerzusammensetzung gemäss Anspruch 1 **dadurch gekennzeichnet, dass** das filmbildende Harz ein Polyesterharz ist.

3. Haftvermittlerzusammensetzung gemäss Anspruch 2 **dadurch gekennzeichnet, dass** das Polyesterharz mindestens eine Hydroxylgruppe aufweist, welche in der Haftvermittlerzusammensetzung mit einer Isocyanatgruppe eines aromatischen Polyisocyanats umgesetzt worden ist.

4. Haftvermittlerzusammensetzung gemäss einem der Ansprüche 2 und 3 **dadurch gekennzeichnet, dass** das Polyesterharz ein Molekulargewicht von 3000 bis 100'000 g/mol und eine mittlere OH-Zahl von 1 bis 10 mg KOH/g.

5. Haftvermittlerzusammensetzung gemäss einem der vorhergehenden Ansprüche, **dadurch gekennzeichnet, dass** mindestens ein aromatisches Polyisocyanat ein aromatisches Polyisocyanat ist, welches mindestens eine Phosphat-, Thiophosphat- oder Thiophosphangruppe aufweist.

6. Haftvermittlerzusammensetzung gemäss einem der vorhergehenden Ansprüche, **dadurch gekennzeichnet, dass** das aromatische Polyisocyanat, welches mindestens eine Phosphat-, Thiophosphat- oder Thiophosphangruppe aufweist, Tris(p-isocyanatophenyl)-thiophosphat ist.

7. Haftvermittlerzusammensetzung gemäss einem der vorhergehenden Ansprüche, **dadurch gekennzeichnet, dass** die Haftvermittlerzusammensetzung mindestens zwei aromatische Polyisocyanate umfasst, wovon mindestens eines ein aromatisches Polyisocyanat ist, welches mindestens eine Phosphat-, Thiophosphat- oder Thiophosphangruppe aufweist.

8. Haftvermittlerzusammensetzung gemäss einem der vorhergehenden Ansprüche, **dadurch gekennzeichnet, dass** im Isocyanurat der Formel (I) a für einen Wert von 0 steht; und/oder
R² unabhängig voneinander für eine Methyl-, Ethyl- oder Isopropylgruppe steht.

9. Haftvermittlerzusammensetzung gemäss einem der vorhergehenden Ansprüche, **dadurch gekennzeichnet, dass** im Isocyanurat der Formel (I) R³ für einen linearen Alkylenrest mit 1 bis 6 C-Atomen steht.

10. Haftvermittlerzusammensetzung gemäss einem der vorhergehenden Ansprüche, **dadurch gekennzeichnet, dass** die Haftvermittlerzusammensetzung zusätzlich mindestens ein aliphatisches Polyisocyanat enthält.

11. Haftvermittlerzusammensetzung gemäss einem der vorhergehenden Ansprüche, **dadurch gekennzeichnet, dass** die Haftvermittlerzusammensetzung zusätzlich mindestens ein Silan der Formel R⁴-Si(R¹)ₐ(OR²)₃₋ₐ enthält, wobei
R⁴ für einen Alkylrest mit mindestens einer funktionellen Gruppe steht, welche gegebenenfalls eine gegenüber Isocyanatgruppen reaktive funktionelle Gruppe ist; und wobei
die funktionelle Gruppe des Silans gegebenenfalls mit einer Isocyanatgruppe eines in der Haftvermittlerzusammensetzung vorhandenen aromatischen oder aliphatischen Polyisocyanats zu einem Addukt umgesetzt worden ist.

12. Haftvermittlerzusammensetzung gemäss einem der vorhergehenden Ansprüche, **dadurch gekennzeichnet, dass** der Anteil an Lösungsmittel 10 bis 90 Gew.-%, bezogen auf das Gesamtgewicht der Haftvermittlerzusammensetzung, beträgt.

13. Haftvermittlerzusammensetzung gemäss einem der vorhergehenden Ansprüche, **dadurch gekennzeichnet, dass** die Haftvermittlerzusammensetzung zusätzlich mindestens einen Füllstoff enthält.

14. Haftvermittlerzusammensetzung gemäss einem der vorhergehenden Ansprüche, **dadurch gekennzeichnet, dass** der Anteil an
- filmbildendem Harz 1 bis 30 Gew.-%;
- aromatischen Polyisocyanat 0.01 bis 40 Gew.-%;
- Lösungsmittel 10 bis 90 Gew.-%;
- Isocyanurat der Formel (I) 0.1 bis 10 Gew.-%;
- aliphatischen Polyisocyanat 0 bis 20 Gew.-%;
- Silan der Formel R⁴-Si(R¹)ₐ(OR²)₃₋ₐ 0 bis 5 Gew.-%;
- Füllstoff 0 bis 20 Gew.-%;
bezogen auf das Gesamtgewicht der Haftvermittlerzusammensetzung, beträgt.

15. Verwendung einer Haftvermittlerzusammensetzung gemäss einem der Ansprüche 1 bis 14 zur Verbesserung der Haftung von Kleb- und Dichtstoffen auf Glas oder Glaskeramik.

16. Substrat, welches mit einer Haftvermittlerzusammensetzung gemäss einem der Ansprüche 1 bis 14 beschichtet ist.

## Claims

1. An adhesive promoter composition, comprising:
- at least one film-forming resin;
- at least one aromatic polyisocyanate;
- at least one solvent; as well as
- at least one isocyanurate of the formula (I) 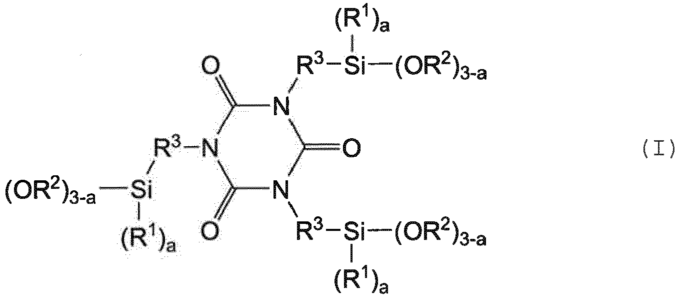 wherein
R¹, independently of one another, stands for a linear or branched monovalent hydrocarbon radical having 1 to 12 carbon atoms, which optionally have one or more C-C multiple bonds and/or optionally cycloaliphatic and/or aromatic components;
R², independently of one another, stands for a linear or branched monovalent hydrocarbon radical having 1 to 12 carbon atoms, optionally having one or more heteroatoms and optionally one or more C-C multiple bonds and/or optionally cycloaliphatic and/or aromatic components; a stands for a value of 0, 1 or 2;
R³, independently of one another, stands for a linear or branched, divalent hydrocarbon radical having 1 to 12 carbon atoms, optionally having one or more heteroatoms and optionally one or more C-C multiple bonds and/or optionally cycloaliphatic and/or aromatic components.

2. The adhesive promoter composition according to Claim 1, **characterized in that** the film-forming resin is a polyester resin.

3. The adhesive promoter composition according to Claim 2, **characterized in that** the polyester resin has at least one hydroxyl group, which has been reacted with an isocyanate group of an aromatic polyisocyanate in the adhesive promoter composition.

4. The adhesive promoter composition according to any one of Claims 2 and 3, **characterized in that** the polyester resin has a molecular weight of 3000 to 100,000 g/mol and an average OH number of 1 to 10 mg KOH/g.

5. The adhesive promoter composition according to any one of the preceding claims, **characterized in that** at least one aromatic polyisocyanate is an aromatic polyisocyanate, which has at least one phosphate, thiophosphate or thiophosphane group.

6. The adhesive promoter composition according to any one of the preceding claims, **characterized in that** the aromatic polyisocyanate which has at least one phosphate, thiophosphate or thiophosphane group is tris(p-isocyanatophenyl) thiophosphate.

7. The adhesive promoter composition according to any one of the preceding claims, **characterized in that** the adhesive promoter composition comprises at least two aromatic polyisocyanates, at least one of which is an aromatic polyisocyanate, which has at least one phosphate, thiophosphate or thiophosphane group.

8. The adhesive promoter composition according to any one of the preceding claims, **characterized in that** in the isocyanurate of the formula (I)
a stands for a value of 0; and/or
R², independently of one another, stands for a methyl, ethyl or isopropyl group.

9. The adhesive promoter composition according to any one of the preceding claims, **characterized in that** R³ in the isocyanurate of the formula (I) stands for a linear alkylene radical having one to six carbon atoms.

10. The adhesive promoter composition according to any one of the preceding claims, **characterized in that** the adhesive promoter composition additionally contains at least one aliphatic polyisocyanate.

11. The adhesive promoter composition according to any one of the preceding claims, **characterized in that** the adhesive promoter composition additionally contains at least one silane of the formula R⁴-Si (R¹)ₐ(OR²)₃₋ₐ, wherein
R⁴ stands for an alkyl radical having at least one functional group, which is optionally a functional group that is reactive with isocyanate groups; and wherein
the functional group of the silane has optionally been reacted with an isocyanate group of an aromatic or aliphatic polyisocyanate present in the adhesive promoter composition to form an adduct.

12. The adhesive promoter composition according to any one of the preceding claims, **characterized in that** the amount of solvent is 10 to 90% by weight, based on the total weight of the adhesive promoter composition.

13. The adhesive promoter composition according to any one of the preceding claims, **characterized in that** the adhesive promoter composition additionally contains at least one filler.

14. The adhesive promoter composition according to any one of the preceding claims, **characterized in that** the amount of
- film-forming resin is 1 to 30% by weight;
- aromatic polyisocyanate is 0.01 to 40% by weight;
- solvent is 10 to 90% by weight;
- isocyanurate of formula (I) is 0.1 bis 10% by weight;
- aliphatic polyisocyanate is 0 to 20% by weight;
- silane of the formula R⁴-Si(R¹)ₐ(OR²)₃₋ₐ is 0 to 5% by weight;
- filler is 0 to 20% by weight;
based on the total weight of the adhesive promoter composition.

15. A use of an adhesive promoter composition according to any one of Claims 1 to 14 to improve the adhesion of adhesives and sealants to glass or glass ceramic.

16. A substrate, which is coated with an adhesive promoter composition according to any one of Claims 1 to 14.

## Revendications

1. Composition de promoteur d'adhésion, comprenant :
- au moins une résine filmogène ;
- au moins un polyisocyanate aromatique ;
- au moins un solvant ; et
- au moins un isocyanurate de formule (I) 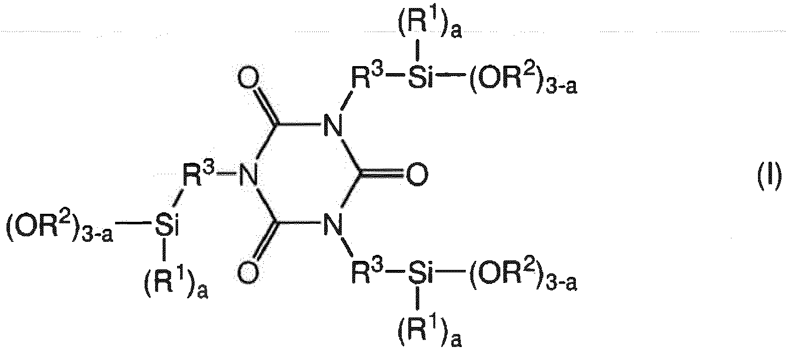 dans laquelle
les R¹ représentent indépendamment les uns des autres un radical hydrocarboné monovalent linéaire ou ramifié, de 1 à 12 atomes C, qui comprend éventuellement une ou plusieurs liaisons multiples C-C et/ou éventuellement des fractions cycloaliphatiques et/ou aromatiques ;
les R² représentent indépendamment les uns des autres un radical hydrocarboné monovalent linéaire ou ramifié, de 1 à 12 atomes C, qui comprend éventuellement un ou plusieurs hétéroatomes et éventuellement une ou plusieurs liaisons multiples C-C et/ou éventuellement des fractions cycloaliphatiques et/ou aromatiques ; a représente une valeur de 0, 1 ou 2 ;
les R³ représentent indépendamment les uns des autres un radical hydrocarboné bivalent linéaire ou ramifié, de 1 à 12 atomes C, qui comprend éventuellement un ou plusieurs hétéroatomes et éventuellement une ou plusieurs liaisons multiples C-C et/ou éventuellement des fractions cycloaliphatiques et/ou aromatiques.

2. Composition de promoteur d'adhésion selon la revendication 1, **caractérisée en ce que** la résine filmogène est une résine de polyester.

3. Composition de promoteur d'adhésion selon la revendication 2, **caractérisée en ce que** la résine de polyester comprend au moins un groupe hydroxyle, qui a été mis en réaction dans la composition de promoteur d'adhésion avec un groupe isocyanate d'un polyisocyanate aromatique.

4. Composition de promoteur d'adhésion selon l'une quelconque des revendications 2 et 3, **caractérisée en ce que** la résine de polyester a un poids moléculaire de 3 000 à 100 000 g/mol et un indice OH moyen de 1 à 10 mg KOH/g.

5. Composition de promoteur d'adhésion selon l'une quelconque des revendications précédentes, **caractérisée en ce qu'**au moins un polyisocyanate aromatique est un polyisocyanate aromatique qui comprend au moins un groupe phosphate, thiophosphate ou thiophosphane.

6. Composition de promoteur d'adhésion selon l'une quelconque des revendications précédentes, **caractérisée en ce que** le polyisocyanate aromatique qui comprend au moins un groupe phosphate, thiophosphate ou thiophosphane est le thiophosphate de tris(p-isocyanatophényle).

7. Composition de promoteur d'adhésion selon l'une quelconque des revendications précédentes, **caractérisée en ce que** la composition de promoteur d'adhésion comprend au moins deux polyisocyanates aromatiques, dont au moins un est un polyisocyanate aromatique qui comprend au moins un groupe phosphate, thiophosphate ou thiophosphane.

8. Composition de promoteur d'adhésion selon l'une quelconque des revendications précédentes, **caractérisée en ce que**, dans l'isocyanurate de formule (I),
a représente une valeur de 0 ; et/ou
les R² représentent indépendamment les uns des autres un groupe méthyle, éthyle ou isopropyle.

9. Composition de promoteur d'adhésion selon l'une quelconque des revendications précédentes, **caractérisée en ce que**, dans l'isocyanurate de formule (1), R³ représente un radical alkylène linéaire de 1 à 6 atomes C.

10. Composition de promoteur d'adhésion selon l'une quelconque des revendications précédentes, **caractérisée en ce que** la composition de promoteur d'adhésion contient en outre au moins un polyisocyanate aliphatique.

11. Composition de promoteur d'adhésion selon l'une quelconque des revendications précédentes, **caractérisée en ce que** la composition de promoteur d'adhésion contient en outre au moins un silane de formule R⁴-Si(R¹)ₐ(OR²)₃₋ₐ, dans laquelle
R⁴ représente un radical alkyle contenant au moins un groupe fonctionnel qui est éventuellement un groupe fonctionnel réactif avec les groupes isocyanate ; et dans laquelle
le groupe fonctionnel du silane a éventuellement été mis en réaction avec un groupe isocyanate d'un polyisocyanate aromatique ou aliphatique présent dans la composition de promoteur d'adhésion pour former un adduit.

12. Composition de promoteur d'adhésion selon l'une quelconque des revendications précédentes, **caractérisée en ce que** la proportion de solvant est de 10 à 90 % en poids, par rapport au poids total de la composition de promoteur d'adhésion.

13. Composition de promoteur d'adhésion selon l'une quelconque des revendications précédentes, **caractérisée en ce que** la composition de promoteur d'adhésion contient en outre au moins une charge.

14. Composition de promoteur d'adhésion selon l'une quelconque des revendications précédentes, **caractérisée en ce que** la proportion
- de résine filmogène est de 1 à 30 % en poids ;
- de polyisocyanate aromatique est de 0,01 à 40 % en poids,
- de solvant est de 10 à 90 % en poids ;
- d'isocyanurate de formule (I) est de 0,1 à 10 % en poids ;
- de polyisocyanate aliphatique est de 0 à 20 % en poids ;
- de silane de formule R⁴-Si(R¹)ₐ(OR²)₃₋ₐ est de 0 à 5 % en poids ;
- de charge est de 0 à 20 % en poids ;
par rapport au poids total de la composition de promoteur d'adhésion.

15. Utilisation d'une composition de promoteur d'adhésion selon l'une quelconque des revendications 1 à 14 pour l'amélioration de l'adhérence de matériaux adhésifs et d'étanchéité sur du verre ou de la vitrocéramique.

16. Substrat, qui est revêtu avec une composition de promoteur d'adhésion selon l'une quelconque des revendications 1 à 14.
